# EUROPEAN PATENT APPLICATION

(11) **EP 1 925 505 A2**
(43) Date of publication of application: **28.05.2008**
(21) Application number: 07022921.6
(22) Date of filing: 27.11.2007
(51) Int. Cl.: B60R 13/10

(54) **Vehicle registration display assembly and a guard device therefor**

(30) Priority: 27.11.2006 GB 0623612
(71) Applicant: The House of Plastic Limited, Buckingham Road Industrial Estate Brackley NN13 7BE (GB)
(72) Inventor: Purvis, Nigel, Brackley NN13 7HG (GB)
(74) Representative: Morris, Jonathan Paul

(57) **Abstract**

A registration display assembly (1;...601) for a vehicle that is arranged to destroy a registration code (5;...605) if the assembly (1;...601) is removed from the vehicle. The assembly includes a dividable element (3;...603) for displaying the registration code (5;...605), fixing means for fixing the assembly (1;...601) to a vehicle. The dividable element (3;...603) includes a separable portion (13;...613) that is arranged to deface the registration code (5;...605) when separated, and the fixing means includes means for fixing the separable portion to a vehicle (19;...619), which is arranged to cause separation of the separable portion (13;...613) when the registration display assembly (1;...601) is removed from the vehicle, and a guard device 23,25 for restricting access to the means for fixing the separable portion to the vehicle (19;...619).

## Description

The present invention relates to a vehicle registration display assembly, a guard device for protecting vehicle registration display assemblies and a method of attaching the vehicle registration assembly to the vehicle.

Producers of registration plates are licensed in some countries, for example in the United Kingdom, which makes it difficult to obtain false registration plates via a manufacturer. Because of this, there has been an increase in the number of thefts of vehicle registration plates directly from vehicles.

Vehicle registration plates are typically attached to vehicles using screws, bolts or double sided foam adhesive are and arranged such that they can be easily removed from the vehicle. Whilst this is convenient for the owner of the vehicle, who may wish to change a registration plate for legitimate reasons, it also makes theft of registration plates very easy.

Registration plates are stolen and attached to other vehicles for many reasons, for example to avoid paying congestion charges, parking tickets, speeding tickets or additional fines associated with those infractions. Since these punitive systems rely heavily on the driver of the vehicle also being the registered keeper of the vehicle, or a person associated with the registered keeper, a person using a stolen registration plate is able to easily avoid the charges and fines payable since that person cannot be identified from the registration code.

These problems have been addressed by using a registration display assembly that separates into a plurality of parts if somebody tries to remove it from a vehicle, for example the registration assembly may have a laminated structure that delaminates leaving at least one part attached to the vehicle. The registration assembly separates in a manner that destroys the registration number and thus renders the assembly unusable.

Some examples of this type of registration plate are disclosed in GB2417359. However, the inventor has discovered that registration assemblies that separate into a plurality of parts when removed from a vehicle are vulnerable to prising and cutting attacks that target the adhesive that attaches the separable part of the registration plate to the vehicle. If this is successfully attacked then the registration plate may be removed without destroying it.

Accordingly the present invention seeks to provide an improved vehicle registration display assembly that mitigates at least some of the above-mentioned problems.

According to one aspect of the present invention there is provided a registration display assembly for a vehicle, the assembly including a registration code, a dividable element, fixing means for fixing the assembly to a vehicle, wherein the dividable element includes a separable portion that is arranged to deface the registration code when separated, the fixing means includes means for fixing the separable portion to the vehicle, which is arranged to cause separation of the separable portion when the registration display assembly is removed from the vehicle, and a guard device for blocking access to the means for fixing the separable portion to the vehicle.

Advantageously the guard device at least partially surrounds the means for fixing the separable portion to the vehicle and preferably the guard device continuously surrounds the means for fixing the separable portion to the vehicle. Advantageously the guard device lies in the same plane as the means for fixing the separable portion to the vehicle.

Preferably the guard device lies in a plane that is substantially parallel with the dividable element. The guard device is located between the dividable element and the vehicle. For example, the guard device can be located between the reverse side of the dividable element and the vehicle body.

Advantageously the guard device includes a first blocking element. Preferably the first blocking element extends substantially continuously around the means for fixing the separable portion to the vehicle. This provides a large degree of protection to the means for fixing the separable portion to the vehicle. However a similar blocking effect can be achieved by using a plurality of blocking elements arranged around the means for fixing the separable portion to the vehicle, for example with small gaps in between. Preferably the first blocking element comprises a first frame member that is substantially rectangular in plan and has substantially planar upper and lower surfaces.

Advantageously the first blocking element includes a guide surface extending along at least a part of at least one outer face of the first blocking element that is arranged to deflect an attacking tool, for example out of the plane of the first blocking element. Preferably the guide surface is substantially planar and is inclined to the vehicle. Advantageously the guide surface is arranged to guide the tool away from the vehicle body so that the tool will interact with the dividable element in such a manner as to separate the separable portion from the dividable element. Preferably the guide surface extends around the first blocking element. Preferably the guide surface has an angle of inclination of around twenty to seventy degrees, and more preferably between thirty and sixty degrees, and more preferably still forty five degrees.

Advantageously the first blocking element can include an inner guide surface arranged to deflect an inner blocking member, for example out of the plane of the first blocking element. For example, the inner guide surface is substantially planar and is inclined to the vehicle.

Preferably the first blocking element has a substantially trapizum cross-section. This is a convenient form for including inner and outer guide surfaces.

Advantageously the display assembly includes means for fixing the first blocking element to the vehicle. Preferably the means for fixing the first blocking element to the vehicle comprises at least one of adhesive and a mechanical fixing means such as screw elements or bolts.

Advantageously the display assembly can include a second blocking element. Preferably the second blocking element extends substantially continuously around the means for fixing the separable portion to the vehicle. Preferably the second blocking element comprises a second frame member that is substantially rectangular in plan and has substantially planar upper and lower surfaces.

Advantageously the second blocking element can be arranged to fit within the first blocking element. This provides an additional layer of protection.

Advantageously the second blocking element can include an outer guide surface arranged to interact with the inner guide surface of the first blocking element. The second blocking element interacts with the first blocking element to enhance the effectiveness of the guard device at dividing the dividable element. Preferably the outer guide surface is planar and is inclined to the vehicle. Preferably the outer guide surface is substantially complementary to the inner guide surface of the first blocking element, the arrangement being such that if an impulse load is applied to the outer (first) blocking element that is sufficiently large to deform the first blocking element the interaction of the inclined surfaces is such that second blocking element moves away from the vehicle body and causes separation of the separable portion of the dividable element.

Advantageously the guard device can include means for attaching the second blocking element to the dividable element. Preferably the arrangement is such that the second blocking element is not attached to the separable part of the dividable element and preferably at least partially surrounds the separable part of the dividable element.

In some embodiments the first and second blocking elements can be joined together and are arranged to separate when the registration display assembly is attacked. This has the advantage of holding the guard device together, for example for assembly and ease of handling. For example, the first and second blocking elements can be joined at relatively weak points or along relatively weak seams that arranged to separate when loaded. Additionally or alternatively, the arrangement may includes lines of weakens, perforations or similar to assist separation.

Advantageously at least one of the first and second blocking elements may have a laminated structure having a relatively soft core material sandwiched between relatively harder outer materials. This has the advantage that the harder outer materials guide cutting tools to cut into the relatively soft core material. Preferably the outer materials are metallic, such as aluminium and the core material is a plastics material such as polyethylene.

Advantageously the guard device can include at least one hard or hardened member for resisting cutting attacks. Preferably the or each hard / hardened member is made from a material that is harder than typical cutting devices such as hacksaws, for example is made from a carbon steel. Advantageously the hard/hardened member may include a groove. For example, the groove may be formed in a side wall and the grooved profile guides the cutting tool to ensure that the tool acts on the body of the hardened member and does not wander into softer material. For example, the groove can be V-shaped, which guides the cutting to the bottom of the groove.

In some embodiments the guard device includes weakened areas to allow the assembly to fracture in predefined positions. Preferably these are arranged to assist separation of the dividable element.

Preferably the registration display assembly includes a support element for supporting the dividable element, means for attaching the dividable element to the support element.

The separable portion of the dividable element remains attached to the vehicle when the registration assembly is removed from the vehicle, which destroys the registration code. Thus the invention cannot be used on other vehicles since it is obvious upon simple visual inspection that the registration code is incomplete.

Advantageously the separable portion of the dividable element may include a frangible portion. Preferably the frangible portion includes at least one area of weakness to allow the separable portion to separate from the remainder of the dividable element more easily. For example, the dividable element can include at least one line of weakness such as a perforated line, a crease, a partial cut, a thinned, stretched or compressed area that allows the separable portion to separate from the remainder of the dividable element more easily when the assembly is removed from a vehicle. Preferably the area of weakness is formed in the dividable element by mechanical means.

Alternatively, the dividable element may include at least first and second separate parts and the fixing means is arranged to fix one of the parts to the vehicle.

Preferably the separable portion is arranged to have a decorative profile. For example, the decorative profile can define a logo or word. This feature can be included in embodiments of the invention that are frangible and embodiments having a dividable element that comprises at least first and second separate parts.

Advantageously the registration code can be applied to one of the dividable element, the support element and the means for attaching the dividable element to the support element. The registration code is preferably applied by printing.

Preferably the fixing means includes an adhesive. For example, the fixing means may include double-sided adhesive tape, an MS polymer type adhesive or a layer of contact adhesive to permanently fix the separable portion of the dividable element to the vehicle. The MS polymer is particularly suitable for this application due to its strength and consistency. Preferably the registration assembly includes at least one moisture carrier device for supplying moisture to the adhesive to assist adhesive curing. Advantageously the registration assembly can include a body including at least one aperture or cut-out section that is arranged to define at least one void for receiving the MS polymer adhesive. Advantageously the moisture carrier can be arranged to include this function to provide a compact arrangement. Also the moisture is then very close to the adhesive to assist the curing process. Additionally, or alternatively, the fixing means may include screw elements such as tamper proof screws to provide a secure attachment.

Advantageously the assembly can include an outer mounting member that is arranged to hold the assembly in place on the vehicle, whilst the MS polymer adhesive cures. For example, the mounting member can include a foam frame located between the film and the vehicle.

Advantageously the means for attaching the dividable element to the support element may include a layer of adhesive. The layer of adhesive can include areas of weakness arranged to weaken the intra adhesive bonds to allow the separable portion of the dividable element to detach from the support element more easily. The layer of adhesive may alternatively be arranged such that it only extends across the non-separable portion of the dividable element, that is the portion that remains attached to the support element. This eliminates adhesion between the separable portion of the dividable element and the support element.

Preferably the assembly includes means for reducing adhesion between the separable portion of the dividable element and the support element. For example a barrier can be located between at least one of the support element and the adhesive layer and the adhesive layer and the separable portion of the dividable element. The barrier may comprise at least one of a low tack film, a layer of oil, an oil based product or wax. The barrier is substantially aligned with the separable portion of the dividable element to prevent it from adhering to the support element when the registration assembly is removed from the vehicle. Alternatively, or additionally, at least one part of the layer of adhesive can be chemically treated to reduce adhesion.

Advantageously the support member can be at least partially transparent.

According to another aspect of the invention there is provided a guard device for a vehicle registration assembly including a first blocking element comprising a substantially continuous frame member arranged to block access to means for fixing a separable portion of the vehicle registration assembly to the vehicle.

Preferably the guard device includes means for fixing the guard device to a vehicle.

Advantageously the guard device can include a second blocking element comprising a second substantially continuous frame member that is arranged to fit into the first blocking element.

Preferably the guard device includes means for fixing the guard device to the vehicle registration assembly.

Advantageously the first blocking element can include an inclined outer guide surface along at least one edge. Preferably the first blocking element includes an inclined inner guide surface. Preferably the second blocking element includes an inclined outer guide surface.

In some embodiments the first and second blocking elements are joined together and are arranged to separate when the registration display assembly is attacked.

Preferably at least one of the first and second blocking elements comprises a laminated structure having a relatively soft core material sandwiched between relatively harder outer materials.

Advantageously the guard device includes at least one hardened member for resisting cutting attacks. Preferably the hardened insert includes a groove.

According to another aspect of the invention there is provided a method of fixing a registration display assembly to a vehicle, including bonding the registration display assembly to the vehicle using a substantially liquid adhesive. This includes liquid adhesives, pasty substances and slow flowing liquids, for example liquids having a high viscosity. The advantage of using this approach is that the substantially liquid adhesive, as oppose to for example an adhesive tape, can flow into place, which enables the adhesive to be used on any vehicle. If tape were used, it would be necessary to have several different adhesive masks to account for differences in the geometry of the mounting area.

Advantageously the method can include bonding the registration display assembly to the vehicle using an MS polymer type adhesive. This is a strong adhesive that has a consistency that makes it easy to apply thickly so that if the registration plate is used in conjunction with a guard device, it is still possible to attach registration display assembly to the vehicle with the adhesive despite the thickness of the guard, which may be several millimeters.

Advantageously the method can include using at least one moisture carrier device to assist the substantially liquid adhesive to cure. This is particularly applicable to MS polymer type adhesives.

Advantageously the registration display assembly includes a registration code and a dividable element, wherein the dividable element includes a separable portion that is arranged to deface the registration code when separated, and the method can include applying the substantially liquid adhesive to the separable portion and fixing the separable portion to the vehicle such that, in use, the cured adhesive causes separation of the separable portion when the registration display assembly is removed from the vehicle.

An embodiment of the present invention will now be described, by way of example only, with reference to the accompanying drawings in which like references indicate equivalent features, wherein:
Figure 1 is an exploded perspective view of a registration plate according to a first embodiment of the invention;
Figure 2 is an exploded perspective view of a mounting assembly for the registration plate of Figure 1;
Figure 3 is a side view of an anti-cutting member;
Figure 4 is a perspective view of a registration plate according to the first embodiment attached to the vehicle;
Figures 5 to 9 show diagrammatically the effects of a prising attack;
Figure 10a shows an alternative mounting assembly;
Figure 10b shows a foam member that can be used as an adhesive guide and a moisture carrier;
Figures 11 to 15 show alternative arrangements to the registration plate of Figure 1.

Typically registration plates are applied to road vehicles, for example cars, motorbikes, lorries, construction vehicles and vans. Usually each vehicle has two registration plates, a first plate mounted at the front of the vehicle, for example in a shallow recess formed in the front bumper, and a second plate mounted at the rear of the vehicle, for example in a shallow recess on the luggage compartment (boot / trunk) cover. Registration plates are typically mounted on a vehicle using screws, bolts or double sided foam adhesive (not shown).

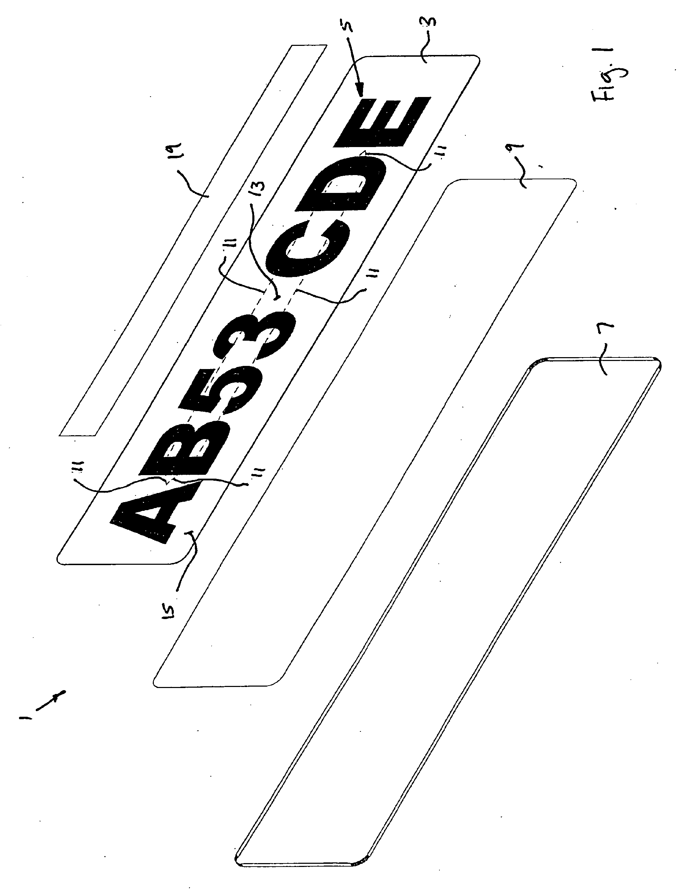

Figure 1 shows one type of vehicle registration plate that is arranged to separate into a plurality of parts when it is removed from a vehicle. The vehicle registration plate 1 comprises a film 3 carrying a printed registration code 5, a transparent cover 7, a layer of adhesive 9 for attaching the film 3 to the cover 7 similar to the conventional registration plate 1 described above. The cover 7, adhesive layer 9 and film 3 form a laminated product.

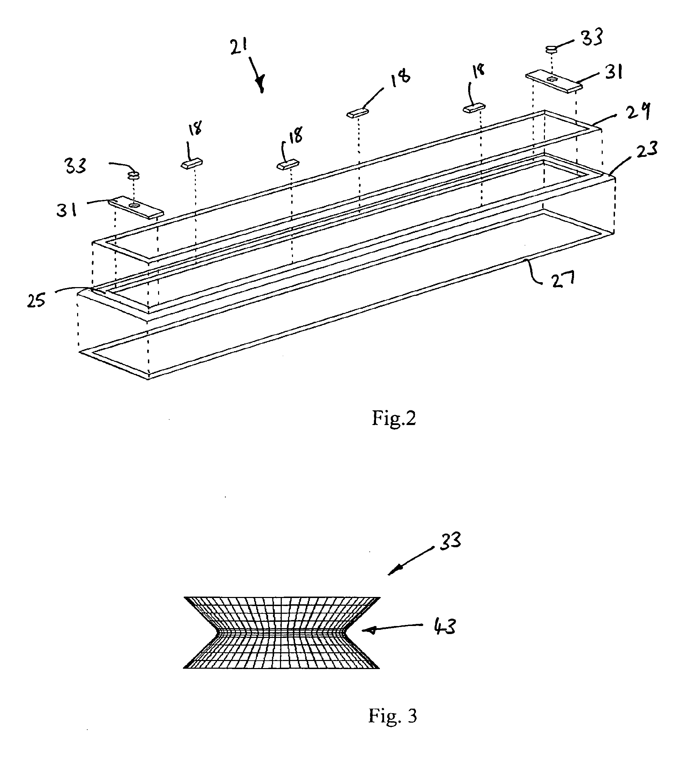

Figure 2 shows the mounting assembly 21 for the registration plate 1 described above. The mounting assembly 21 includes an outer frame member 23 an inner frame member 25, a first layer of adhesive 27 for attaching the outer frame member 23 to the vehicle body 17 and a second layer of adhesive 29 for attaching the inner frame member 25 to the registration plate 1, the mounting member 31 and an anti-cutting member 33 housed in the mounting member 31.

The registration code 5 comprises letters of the alphabet and / or numbers which form a unique code for each vehicle, and in this example comprises the characters AB53CDE. The registration code 5 is arranged for visual inspection so that the registration code 5 can be read by drivers and pedestrians within the vicinity of the vehicle bearing the registration plate 1.

The film 3 is preferably a plastics film such as a polyester film, and the characters of the registration code may be applied to one planar face of the film using conventional printing techniques. The film has a reflective coating so that the registration code 5 can be read at night when illuminated by car head lamps or street lighting. The printed characters of the registration code contrast with the reflective coating.

The film 3 is supported by the cover 7. The surface of the film on which the registration code is printed faces towards the cover 7. The cover 7 also protects the film 3 from mechanical damage and dirt. The cover 7 is made from a transparent material such as acrylic, and the layer of adhesive 9 is also transparent. This ensures that the vehicle registration code can be seen.

The film 3 includes areas of weakness 11 (shown as a dotted line) formed in the film 3 that are arranged to tear the film 3 when loads are applied to it. The areas of weakness 11 are linear and are joined together to define a first part 13 that extends longitudinally across the film and a second part 15 that surrounds the first part 13. The first part 13 is aligned with at least some of the registration code characters printed on the film 3 such that when the first part 13 is separated from the second part 15 the registration code 5 is defaced and made illegible.

The areas of weakness 11 can include creases, partial cuts into the thickness of the film (so called kiss cutting), perforations or areas of weakness 11 formed by chemically weakening the film 3 in a localised area. The areas of weakness 11 can be formed integrally in the film 3 when it is produced or can be formed in the film 3 by a later machining or pressing process. This allows existing registration plates 1 to be adapted in accordance with the invention.

The areas of weakness 11 can be arranged in any manner that causes the film 3 to separate into a plurality of parts when it tears and wherein the registration code 5 is defaced. For example, a single line of weakness 11 extending across the width or length of the film can be used to separate the film 3 into two halves. An adhesive fixing can be applied between one half of the film and the vehicle 17 and not the other, such that only one half of the film will remain attached to the vehicle 17 and the other half will be detached from the vehicle 17. The areas of weakness 11 can be arranged to form a pattern, word or logo. For example, when the first and second parts 13,15 separate the profile of the first part 13 will be the same as the profile of the logo / word and the second part 15 will have a hole with a complementary profile.

The film 3 is attached to the cover 7 via a layer of adhesive 9 similar to the conventional vehicle registration plate. The cover 7 supports the film 3. The registration plate 1 is attached to a vehicle 17 (see Figure 3) using screws or bolts which pass through holes (not shown) in the second part 15 of the film, or using or double sided foam adhesive (not shown).

Adhesive 19 is applied to the film 3 on the opposite surface to that which the registration code is printed so that it may be firmly attached to the vehicle 17. The adhesive 19 is aligned with the first part 13 of the film and is arranged to ensure that the first part 13 of the film remains attached to the vehicle when the number plate is removed from the vehicle. The adhesive 19 is preferably an MS polymer type adhesive since this is a very strong adhesive and has a particular consistency that enables a thick layer or strip to be applied which is desirable for connecting the first part 13 of the film with the vehicle 17 when the registration plate 1 is mounted on a mounting assembly 21, due to the depth of the mounting assembly and hence the gap between the film 3 and the vehicle 17. This makes the MS polymer type adhesive particularly suitable for this application.

An MS polymer adhesive requires moisture in order to cure. If an MS polymer adhesive 19 is used, it can be used in conjunction with at least one moisture carrier device 18 to assist the curing process (four shown in Figure 2). These can be mounted on the mounting assembly 21, for example by clipping or sticking onto an internal edge of the mounting assembly 21, can be located within the assembly 21 or attached to the vehicle 17 in the vicinity of the adhesive 19. Preferably the or each moisture carrier device 18 can be of any suitable form for example it may include a sponge, card, paper or a moisture carrying gel or chemical. The moisture carrier devices 18 are particularly useful if the design of the mounting assembly 21 and registration plate 1 is such that it restricts the flow of air to the adhesive 19 since the adhesive 19 would normally take moisture from the air in order to cure. The moisture carriers 18 may be supplied pre-moistened in one or more sealed containers.

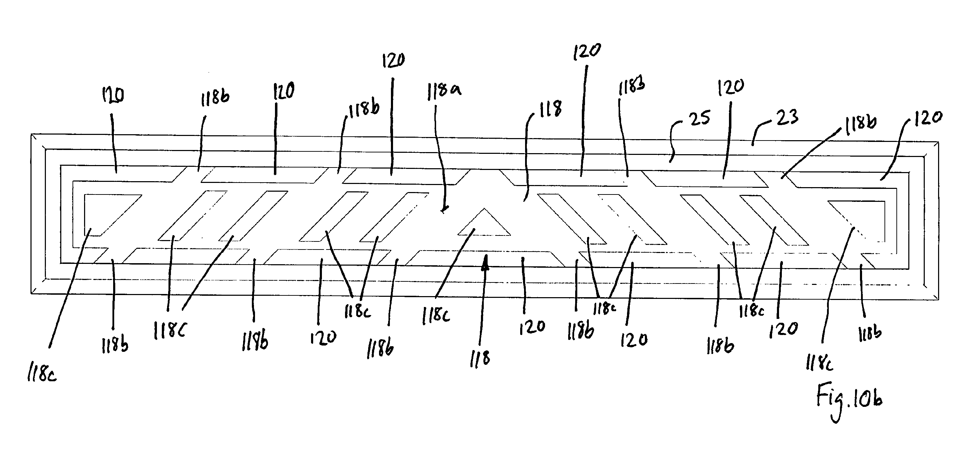

An alternative moisture carrier 118 arrangement is shown in Figure 10b. The moisture carrier 118 is in the form of an open cell foam structure that is arranged to fit within the mounting assembly 21, and in particular, within the inner frame member 25. The alternative moisture carrier 118 includes a substantially rectangular body 118a (in plan), a series of protrusions 118b that extend from the main body towards the inner frame member 25, and apertures 118c formed through the main body. The moisture carrier 118 is symmetrical about a lateral axis. The protrusions 118b are inclined to the edge of the body 118a and extend from the body 118a to the inner face of the inner frame member 25. This maintains the position of the moisture carrier 118 within the inner frame member 25. The protrusions 118b, the body 118a and inner frame member 25 define voids 120. The voids 120 and the apertures 118c are arranged to receive the MS polymer adhesive and therefore the moisture carrier 118 also acts as an adhesive guide. The arrangement of the voids 120 and apertures 118c is to ensure that the adhesive is applied across the first part of the film 13 in a pattern that achieves a strong bond between vehicle and film, and that helps to initiate separation of the film when the registration assembly is attacked.

As an alternative to the moisture carriers 18,118, the mounting assembly 21 can be arranged to allow air to circulate around the adhesive 19 for example by including gaps in the assembly 21.

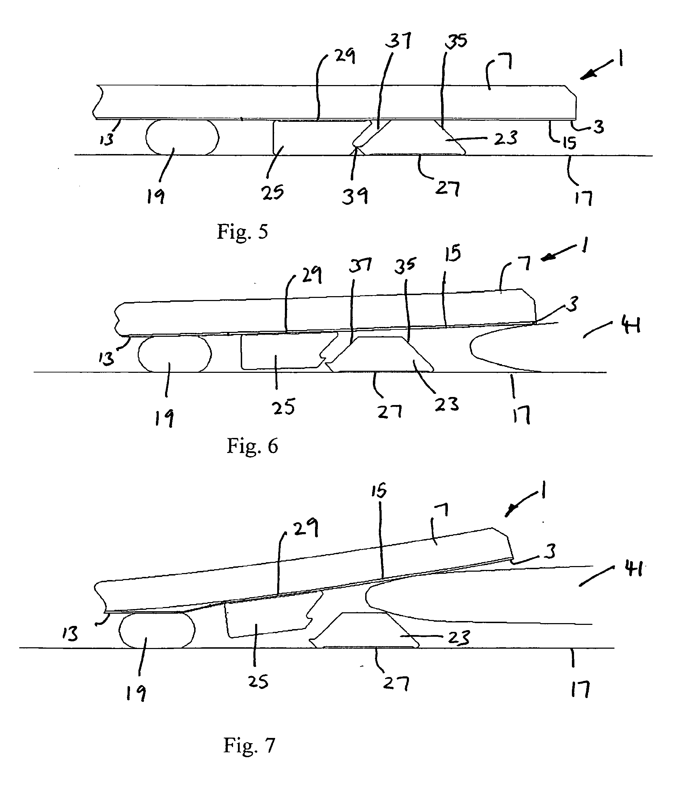

The outer frame member 23 is substantially rectangular in plan and is a continuous frame member having a substantially trapezium cross-section (see Figure 5) that presents outer and inner sloping side faces 35 and 37. The inner frame 25 has an outer face that is substantially complementary to the inner face 37 of the outer frame member 23. The inner face of the inner frame member is substantially orthogonal with respect to the upper and lower surfaces. Thus the inner frame 25 is arranged to fit into the outer frame 23. The depth of the inner and outer frames 25,23 is the same such that when the inner frame 25 is mounted within the outer frame 27 they lie substantially flush.

The outer and inner frames 23,25 are preferably formed by an extrusion process and then bending the profiled extrusions into the substantially rectangular frames. The frames 23,25 are manufactured from a laminated material comprising a plastics core such as a polyethylene core having 3mm thickness, said core being sandwiched between outer layers of harder materials such as a metallic material such as aluminium. The structure of the composite material is arranged such that an attack by a saw blade, knife or hot wire guides the cutting device to the softer part of the lamination such that it will eventually engage the anti-cutting member 33 (see below). A further advantage of this structure is that when it is bent to a curved shape, for example to be fitted to a curved car bumper, it holds the registration plate in the curved shape against the resiliency of the cover 7.

Alternatively the inner and outer frames 25,23 can be made from aluminium. Preferably the aluminium is not heat treated so as to retain its malleably quality. Similarly to the composite structure described above when it is bent to a curved shape it holds the registration plate in the curved shape against the resiliency of the cover 7. Also, an aluminium structure will deform when attacked with a tool. It is also cheaper to produce than the composite structure.

Optionally, at least one of the inner and outer frames 25,23 can included areas of weakness for controlled fracture of the frames.

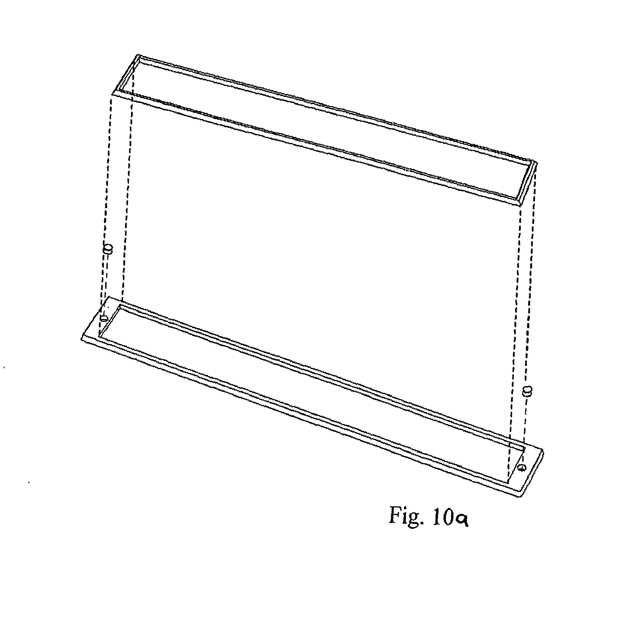

When the outer and inner frames 23,25 are extruded the inner and outer frames 25,23 may be joined together (see reference number 39 in Figure 5) along the inner face 37 of the outer frame member and outer face of the inner frame member 25. The join 39 is very weak such that the outer and inner frames 23,25 will separate if the registration assembly 1 is attacked with a prising or cutting tool 41 (see Figure 6). Thus the inner and outer frames are in effect a single frame comprising a plurality of separable parts. Alternatively, the inner and outer frames 25,23 can be arranged totally separately, for example see Figure 10a.

The sloping outer side face 35 of the outer frame member 23 is arranged to initiate delamination of the number plate 1 if the outer frame 23 is hit with a tool 41 such as a chisel or screwdriver. The sloped face 35 causes the tool 41 to move away from the vehicle 17 and hence causes the registration plate 1 to delaminate by separating the second part 13 of the film from the body of the registration plate 1 since this remains attached to the vehicle 17 by the adhesive 19.

The mounting member 31 fits into the inner frame 25 and is fixed thereto by an adhesive. The mounting member 31 supports the anti-cutting member 33. The anti-cutting member 33 comprises a disc of hard material, such as a carbon steel, having a v-shaped groove 43 formed in its curved surface. The purpose of the anti-cutting member 33 is that if a thief tries to remove the registration plate 1 from the vehicle 17 using a cutting device such as a blade, hacksaw or cutting wire it will be able to cut through the relatively softer materials of the inner and outer frames 25,23 and the mounting member 31. However when it reaches the anti-cutting member 33 the v-shaped groove 43 guides the cutting device into the apex of the groove and it is not possible to cut any further since the anti-cutting device will typically be harder than the cutting device. For example, the anti-cutting device will strip the teeth from a typical hacksaw blade. Thus the registration plate 1 is protected from cutting attacks from each end of the registration plate.

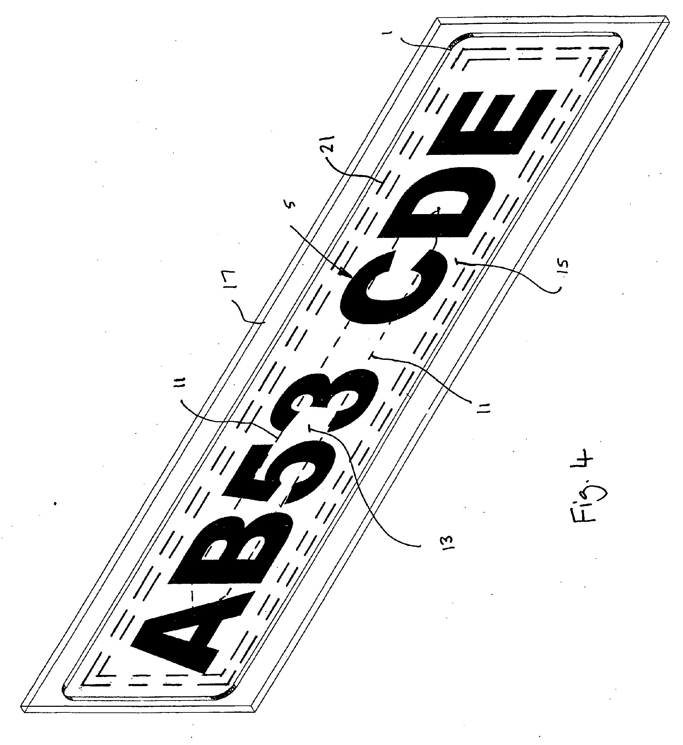

Figure 4 shows the registration plate attached to the vehicle 17 by the mounting assembly 21. The inner frame 25 is attached to the second part 15 of the film via the second layer of adhesive 29. The arrangement is such that the inner frame 25 surrounds the first part of the film 13 such that it also surrounds the adhesive 19. The outer frame 23 is fixed to the vehicle 17 via the first layer of adhesive 27. It is arranged such that the inner frame 25 fits within the outer frame 23 and thus the mounting assembly 21 lies in a plane that is substantially parallel to the dividable film 3. The first part of the film 13 is attached to the vehicle 17 via the adhesive 19. The second part of the film 15 is not attached to the vehicle 17. Alternatively, or additionally to the first and second layers of adhesive 27, 29, the outer frame 23 can be attached to the vehicle using other means such as self tapping screws or nut and bolt arrangements. This is also the case for the attachment of the inner frame 25 to the registration plate 1.

To remove the registration plate 1 from the vehicle 17, a person would first remove any screws or bolts and then typically try one of three attacks: (1) prise the registration plate from the vehicle 17 using the tool 41, (2) hit the mounting assembly 21 with a sudden impact using the tool 41, or (3) use a cutting device to cut through the mounting assembly 21 from the side.

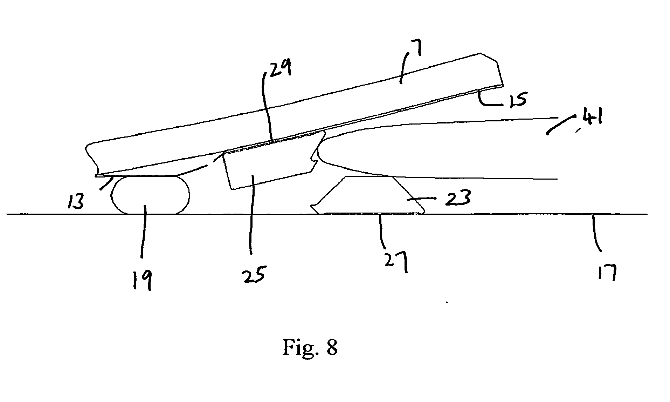

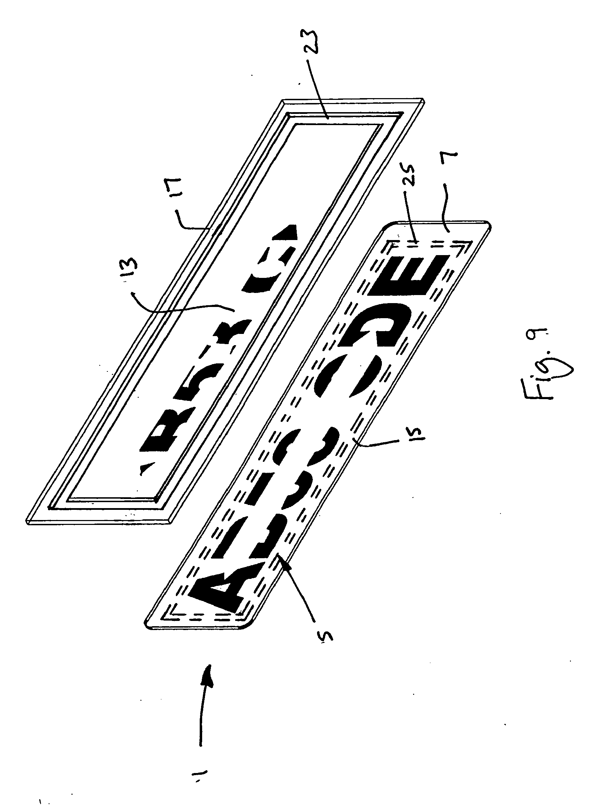

If a thief tries to prise the registration plate 1 from the vehicle (see Figures 5 to 8), the tool 41 is guided by the sloping side face 35 of the outer frame away from the vehicle 17. It rides over the sloping side face 35 and lifts the registration plate 1 away from the vehicle 17 since the registration plate 1 is not fixed to the outer frame 23. Since the inner frame 25 is attached to the film 3, it moves upward with the registration plate 1 as the prising tool 41 progresses. As the load on the registration plate 1 increases, and hence the angle of inclination of the registration plate 1 increases, the load on the film 3 causes it to tear along the areas of weakness 11 and the first and second parts 13,15 of the film separate: the first part 13 of the film remains fixed to the vehicle 17 because of the adhesive 19 and the second part 15 of the film remains attached to the cover 7 and is separated from the vehicle 17 (see Figure 8). The vehicle registration code 5 is thus defaced (see Figure 9). When the registration plate 1 is inspected it will be obvious that parts of some of the characters of the registration code 5 are missing, thus rendering the vehicle registration plate 1 unusable for other vehicles.

If a thief tries to remove the registration plate 1 by hitting it with a chisel, or similar implement to impart a substantial impulse load to the outer frame 23 with a view to shearing it from the vehicle, since the frames 23,25 have a relatively soft core, the outer frame 23 is likely to collapse inward around the point of impact. As this happens, the sloping inner surface 37 of the outer frame 23 interacts with the sloping outer surface of the inner frame, which causes the inner frame 25 and hence the registration plate 1 to move away from the vehicle 17. This causes the film 3 to tear along the areas of weakness 11 and the first and second parts 13,15 of the film separate: the first part 13 of the film remains fixed to the vehicle 17 because of the adhesive 19 and the second part 15 of the film remains attached to the cover 7 and is separated from the vehicle 17. Thus the registration code 5 is destroyed.

If a thief tries to cut the registration plate 1 from the vehicle 17 via the hardened inserts 33 prevent the cutting operation from being successful.

It will be appreciated by the skilled person that the invention will also work to some degree using a mounting assembly 21 including a single frame, such as the outer frame 23 alone. For example a single frame system using the outer frame 23 together with the anti-cutting members 33 is effective against prising attacks and side cutting attacks but is less effective against impulse attacks.

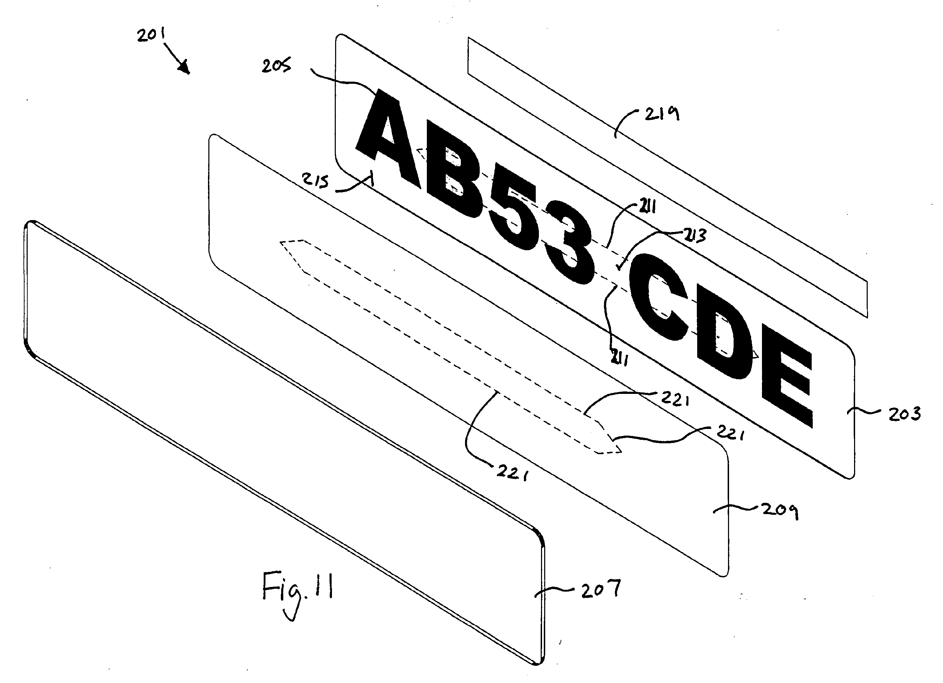

Other examples of registration plates that can be used in conjunction with the mounting assembly 21 are shown in Figures 11 to 15.

Figure 11 shows a second embodiment 201 of the invention. The second embodiment 201 is arranged similarly to the first embodiment and comprises a film 203 having first and second parts 213,215 defined by areas of weakness 211 formed in the film, a strip of double sided adhesive tape 219 for attaching the first part 213 of the film to a vehicle, a transparent cover 207 and a layer of adhesive 209 for attaching the cover 207 to the film 203.

In the second embodiment areas of weakness 221 (shown as dotted lines) are formed in the adhesive layer 209 to ensure that when the registration plate 201 is removed from a vehicle the first part 213 of the film separates from the cover 207 and remains attached to the vehicle. The bond between first part 213 of the film and the cover 207 is weaker than the bond between the first part 213 and the vehicle, to ensure that the first part 213 separates from the cover 207 instead of the vehicle.

Alternatively, the adhesive layer 209 can be formed with a gap therein such that at least a portion of the first part 213 of the film is not overlayed with adhesive, thereby eliminating adhesion between the first part 213 and the cover 207 to ensure that the first part 213 remains attached to the vehicle and not the cover 207 when the registration plate 201 is removed from the vehicle.

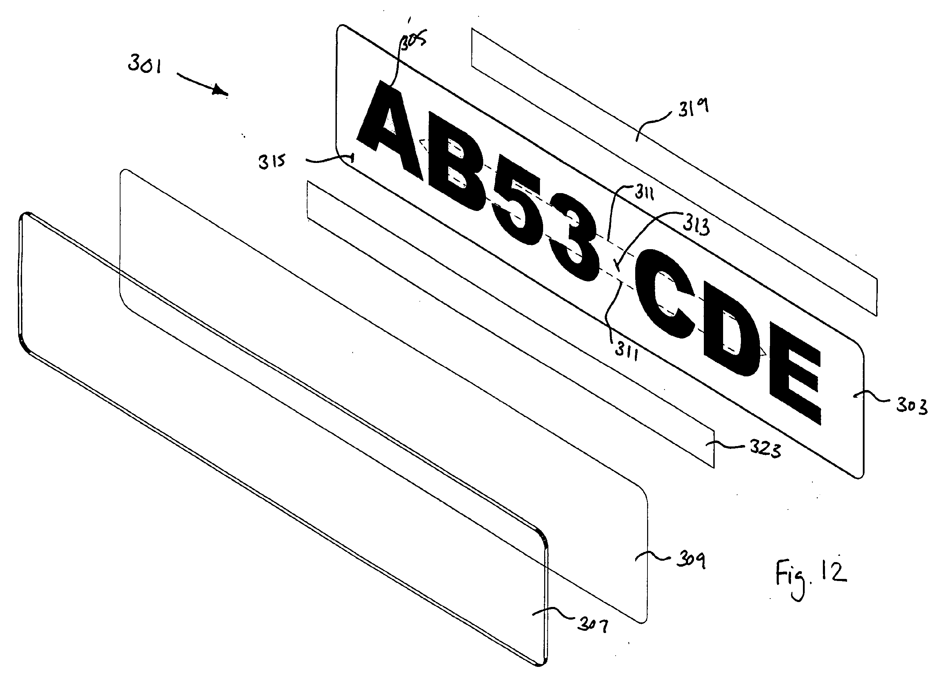

Figure 12 shows a third embodiment 301 of the invention. The third embodiment 301 is similar to the first and second embodiments and comprises a film 303 having first and second parts 313,315 defined by areas of weakness 311 formed in the film 303, a strip of double sided adhesive tape 319 for attaching the first part 313 of the film to a vehicle, a transparent cover 307 and a layer of adhesive 309 for attaching the cover 307 to the film 303.

Instead of creating areas of weakness or a gap in the adhesive layer 309 to ensure that the first part 313 of the film remains attached to a vehicle when the registration plate is removed, the third embodiment includes a strip of low tack film 323, such as low density polyethylene between the adhesive layer 309 and the first part 313. The low tack film 323 is used to reduce the adhesion between the first part 313 of the film and the adhesive layer 309 to ensure that the first part 313 separates from the protective cover 307 and not the vehicle. When separation takes place, the low tack film 323 remains adhered to the adhesive layer 309.

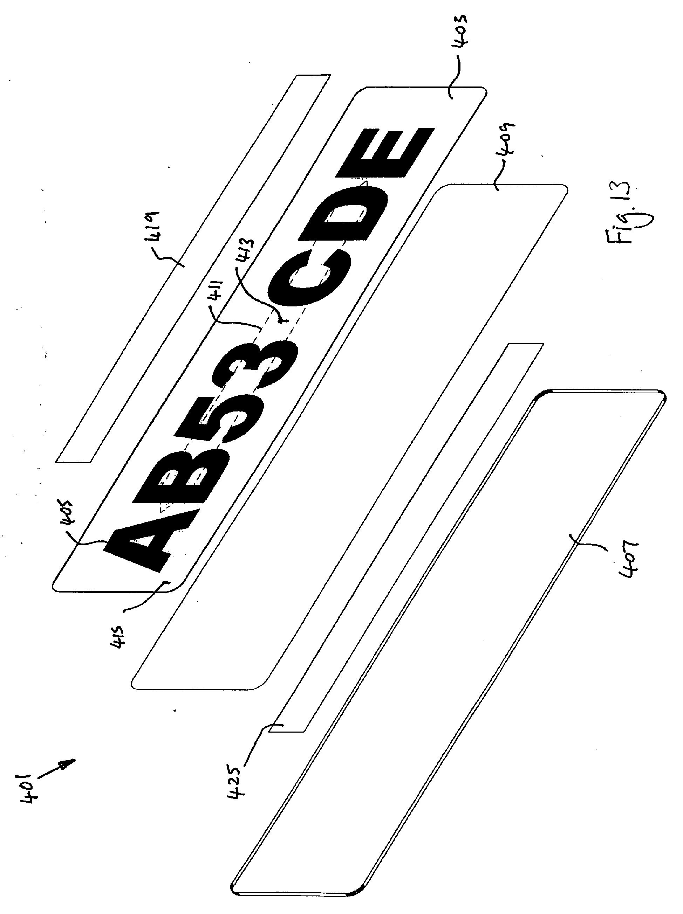

Figure 13 shows a fourth embodiment 401 of the invention. The fourth embodiment 401 is similar to the third embodiment and comprises a film 403 having first and second parts 413,415 defined by areas of weakness 411 formed in the film 403, a strip of double sided adhesive tape 419 for attaching the first part 413 to a vehicle, a transparent cover 407, a layer of adhesive 409 for attaching the cover 407 to the film 403, and a strip of low tack film 425 between the layer of adhesive 409 and the cover 407.

The low tack film 425 is used to reduce the adhesion between the adhesive layer 409 and the cover 407 to ensure that the first part 413 of the film separates from the protective cover 407 when the registration plate 401 is removed. When separation takes place, the part of the adhesive layer that extends across the first part of the film and the low tack film 425 remain attached to the vehicle with the first part 413 of the film.

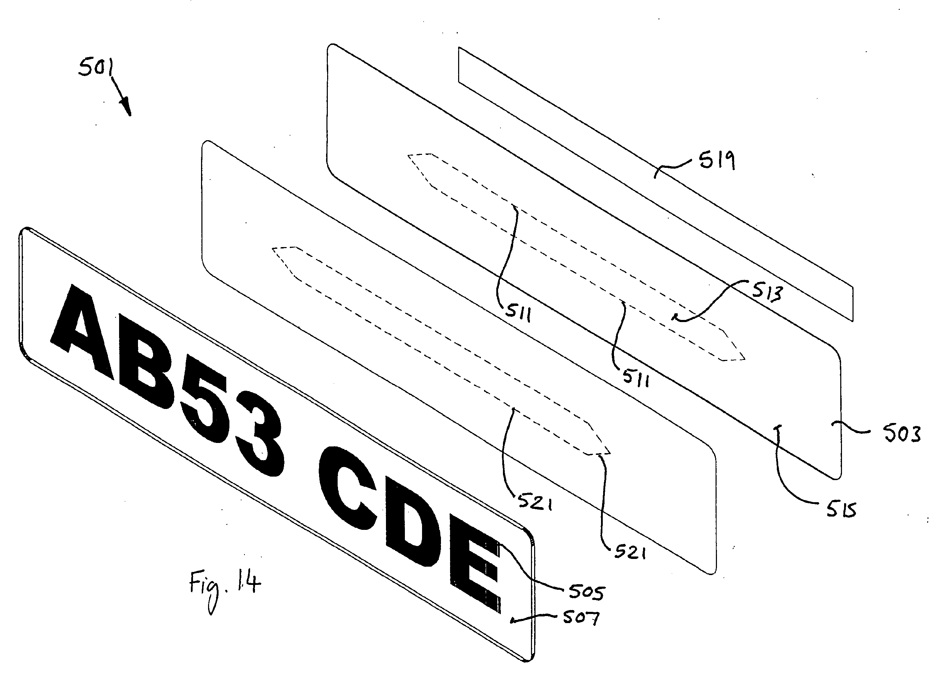

Figure 14 shows a fifth embodiment 501 of the invention. The fifth embodiment 501 is arranged similarly to the first embodiment 101 and comprises a film 503 having first and second parts 513,515 defined by areas of weakness 511 formed in the film, a strip of double sided adhesive tape 519 for attaching the first part 513 of the film to a vehicle, a transparent cover 507 and a layer of adhesive 509 for attaching the cover 507 to the film 503.

In this embodiment the registration code 505 is printed onto the internal face of the transparent cover instead of the film 503. When the registration plate is removed from a vehicle the first part 513 of the film remains attached to the vehicle due to the double sided adhesive tape 519 and the second part 515 separates from the vehicle. The arrangement is such that the bonds between the first part 513 of the film and the adhesive layer 509, and the printed registration code 505 and the adhesive layer 509, are stronger than the bonds between the registration code 505 and the cover 507, such that when the registration plate is removed from the vehicle the first part 513 of the film separates from the cover 507 and removes parts of at least some of the registration code characters from the cover 507 thereby defacing the registration code 505.

Optionally, areas of weakness 521 (shown as dotted lines) can be formed in the adhesive layer 509 to weaken intra-adhesive bonds to allow the part of the adhesive layer 509 that covers the first part 513 of the film to disassociate from the transparent cover 507 more easily.

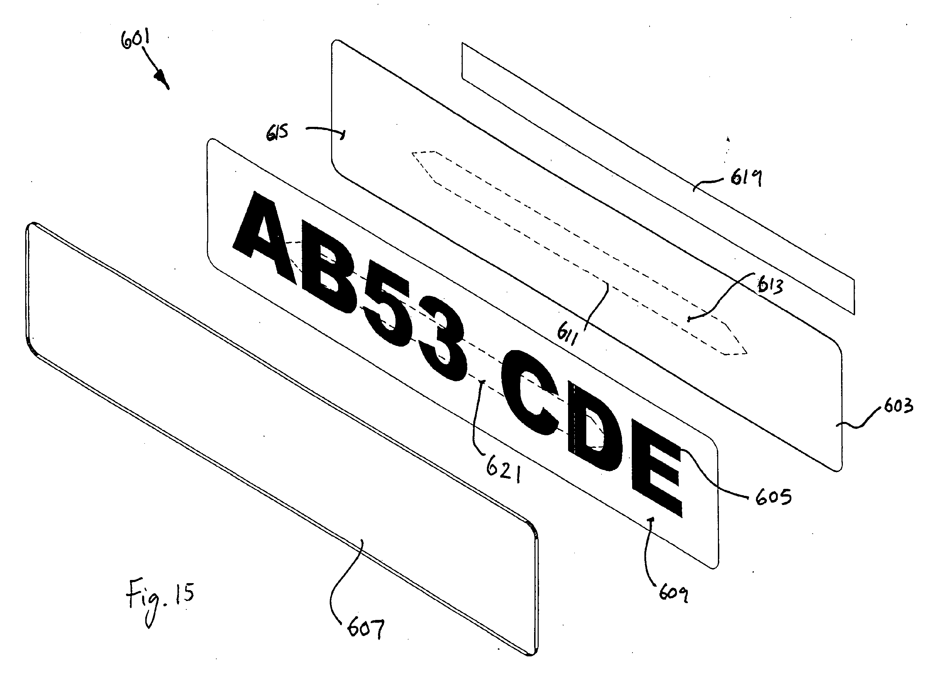

Figure 15 shows a sixth embodiment 601 of the invention. The sixth embodiment 601 is arranged similarly to the fifth embodiment 501 and comprises a film 603 having first and second parts 613,615 defined by areas of weakness 611 formed in the film, a strip of double sided adhesive tape 619 for attaching the first part 613 of the film to a vehicle, a transparent cover 607 and a layer of adhesive 609 for attaching the cover 607 to the film 603.

In this embodiment the registration code 605 is printed onto the adhesive layer 609 instead of the transparent cover 607, but otherwise it operates in a similar fashion to the fifth embodiment 501.

Optionally, areas of weakness 621 (shown as dotted lines) can be formed in the adhesive layer 609 to weaken intra-adhesive bonds to allow the part of the adhesive layer 609 that covers the first part 613 of the film to disassociate from the remainder of the adhesive layer more easily.

It will be appreciated that alterations can be made to the embodiments described above without departing from the scope of the present invention. For example, it is possible to include both low tack films of the third and fourth embodiments and to use the low tack films in conjunction with the fifth and sixth embodiments. The low tack films can also be used in conjunction with areas of weakness in the adhesive layer.

To reduce adhesion between the adhesive layer and the cover and /or the adhesive layer and the first part of the film to allow separation to take place more easily, barriers such as oils, oil based products or wax can be used in addition to or as alternatives for the low tack films. For example, a layer of oil can be formed between that part of the adhesive layer that is aligned with the first part of the film and the cover. The oil prevents that part of the adhesive layer from forming a strong bond with the cover and so when the registration plate is removed from the vehicle the first part of the film separates from the cover and remains attached to the vehicle. Alternatively, or in addition, parts of the adhesive layer can be chemically treated to reduce adhesion in localised areas to have the same effect. For example, that part of the adhesive layer that is aligned with the first part of the film can be so treated.

Tamper proof screw elements can be used to secure the first part of the backing layer to the vehicle. Alternatively, some other means of permanently attaching the first part of the backing layer to the vehicle can be used provide that it does not obscure the vehicle registration code.

Additional areas of weakness can be included in the first part of the film such that if an attempt is made to prise the first part from the vehicle, the first part will tear into further pieces to ensure that it cannot be reused.

Instead of having areas of weakness that allow the first part of the film to separate from the second part of the film, the first and second parts can be entirely separate from each other for example, by cutting through the film completely.

The film may comprise any suitable plastics film or any suitable metallic film.

A rectangular foam frame can be applied to the vehicle and/or the second part of the film 15 on the reverse side, for example by a contact adhesive so that it surrounds the outer frame member 25. The foam frame has substantially the same thickness as the guard device such that it fills the void between the film 3 and the vehicle thereby providing additional support to the registration assembly while the MS polymer adhesive sets. The foam frame also provides some additional security since, if a prising tool is used to remove the registration plate, the foam bunches up underneath film 3 and its bulk helps to initiate the separation of the first and second parts 13,15 of the film.

## Claims

1. A registration display assembly for a vehicle, the assembly including a registration code, a dividable element, fixing means for fixing the assembly to a vehicle, wherein the dividable element includes a separable portion that is arranged to deface the registration code when separated, the fixing means includes means for fixing the separable portion to the vehicle, which is arranged to cause separation of the separable portion when the registration display assembly is removed from the vehicle, and a guard device for blocking access to the means for fixing the separable portion to the vehicle.

2. A registration display assembly according to claim 1, wherein the guard device at least partially surrounds the means for fixing the separable portion to the vehicle.

3. A registration display assembly according to claim 2, wherein the guard device continuously surrounds the means for fixing the separable portion to the vehicle.

4. A registration display assembly according to any one of the preceding claims, wherein the guard device is located between the dividable element and the vehicle.

5. A registration display assembly according to any one of the preceding claims, wherein the guard device includes a first blocking element.

6. A registration display assembly according to claim 5, wherein the first blocking element includes a guide surface extending along at least a part of at least one outer face of the first blocking element that is arranged to deflect an attacking tool.

7. A registration display assembly according to claim 5 or 6, wherein the first blocking element includes an inner guide surface arranged to deflect an inner blocking member out of the plane of the first blocking element.

8. A registration display assembly according to any one of claims 5 to 7, including means for fixing the first blocking element to the vehicle.

9. A registration display assembly according to any one of claims 5 to 8, including a second blocking element.

10. A registration display assembly according to claim 9, wherein the second blocking element is arrange to fit within the first blocking element.

11. A registration display assembly according to claim 9 or 10, wherein the second blocking element includes an inclined outer guide surface.

12. A registration display assembly according to any one of claims 9 to 11, including means for attaching the second blocking element to the dividable element.

13. A registration display assembly according to any one of claims 5 to 12, wherein the first and second blocking elements are joined together and are arranged to separate when the registration display assembly is attacked.

14. A registration display assembly according to any one of the preceding claims, wherein at least one of the first and second blocking elements comprises a laminated structure having a relatively soft core material sandwiched between relatively harder outer materials.

15. A registration display assembly according to any one of the preceding claims, wherein the guard device includes at least one hardened insert for resisting cutting attacks.

16. A registration display assembly according to claim 15, wherein the hardened insert includes a guide surface for guiding an attacking tool to a central portion of the hardened insert.

17. A registration display assembly according to any one of the preceding claims, wherein the guard device includes weakened areas to allow the assembly to fracture in predefined positions.

18. A registration display assembly according to any one of the preceding claims, including a support element for supporting the dividable element, and means for attaching the dividable element to the support element.

19. A registration display assembly according to any one of the preceding claims, wherein the separable portion of the dividable element includes a frangible portion.

20. A registration display assembly according to claim 19, wherein the frangible portion includes at least one area of weakness to allow the separable portion to separate from the remainder of the dividable element more easily.

21. A registration display assembly according to any one of the preceding claims, wherein the dividable element comprises at least first and second separate parts and the fixing means is arranged to fix one of the parts to the vehicle.

22. A registration display assembly according to any one of the preceding claims, wherein the registration code is applied to the dividable element, the support element or the means for attaching the dividable element to the support element by printing.

23. A guard device for a vehicle registration assembly including a first blocking element comprising a substantially continuous frame member arranged to block access to means for fixing a separable portion of the vehicle registration assembly to the vehicle.

24. A guard device according to claim 23, including means for fixing the guard device to a vehicle.

25. A guard device according to claim 23 or 24, including a second blocking element comprising a second substantially continuous frame member that is arranged to fit into the first blocking element.

26. A guard device according to claim 25, including means for fixing the guard device to the vehicle registration assembly.

27. A guard device according to any one of claims 23 to 26, wherein the first blocking element includes a guide surface extending along at least a part of at least one outer face of the first blocking element that is arranged to deflect an attacking tool.

28. A guard device according to any one of claims 23 to 27, wherein the first blocking element includes an inner guide surface arranged to deflect an inner blocking member out of the plane of the first blocking element.

29. A guard device according to any one of claims 25 to 28, wherein the second blocking element includes an inclined outer guide surface.

30. A guard device according to any one of claims 23 to 29, wherein the first and second blocking elements are joined together and are arranged to separate when the registration display assembly is attacked.

31. A guard device according to any one of claims 23 to 30, wherein at least one of the first and second blocking elements comprises a laminated structure having a relatively soft core material sandwiched between relatively harder outer materials.

32. A guard device according to any one of claims 23 to 31, wherein the guard device includes at least one hardened insert for resisting cutting attacks.

33. A guard device according to claim 32, wherein the hardened insert includes a groove.

34. A guard device according to any one of the preceding claims, wherein the means for fixing the separable portion to the vehicle comprises a substantially liquid adhesive, and preferably includes an MS polymer type adhesive.

35. A method of fixing a registration display assembly to a vehicle, including bonding the registration display assembly to the vehicle using a substantially liquid adhesive.

36. A method according to claim 35, wherein the substantially liquid adhesive includes an MS polymer type adhesive.

37. A method according to claim 35 or 36, including using at least one moisture carrier device to assist the substantially liquid adhesive to cure.

38. A method according to any one of claims 35 to 37, wherein the registration display assembly includes a registration code and a dividable element, wherein the dividable element includes a separable portion that is arranged to deface the registration code when separated, the method including applying the substantially liquid adhesive to the separable portion and fixing the separable portion to the vehicle such that, in use, the cured adhesive causes separation of the separable portion when the registration display assembly is removed from the vehicle.
